# EUROPÄISCHE PATENTSCHRIFT

(11) **EP 1 250 525 B1**
(45) Veröffentlichungstag und Bekanntmachung des Hinweises auf die Patenterteilung: **06.07.2005**
(21) Anmeldenummer: 00983352.6
(22) Anmeldetag: 20.12.2000
(51) Int. Cl.: F02D 41/40

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF POUR COMMANDER UN MOTEUR A COMBUSTION INTERNE

(30) Priorität: 12.01.2000 DE 10000918
(43) Veröffentlichungstag der Anmeldung: 23.10.2002
(73) Patentinhaber: Volkswagen Aktiengesellschaft, 38436 Wolfsburg (DE)
(72) Erfinder: SCHULTALBERS, Winfried, 38536 Meinersen (DE); JELDEN, Hanno, 38165 Lehre (DE); KREBS, Rudolf, 38176 Wendeburg (DE)
(86) Internationale Anmeldenummer: PCT/EP2000/013007
(87) Internationale Veröffentlichungsnummer: WO 2001/051794

(56) Entgegenhaltungen:
- EP-A- 0 891 895
- EP-A- 0 921 296
- EP-A- 0 937 884
- US-A- 4 432 430
- PATENT ABSTRACTS OF JAPAN vol. 2000, no. 02, 29. Februar 2000 (2000-02-29) & JP 11 324771 A (MITSUBISHI ELECTRIC CORP), 26. November 1999 (1999-11-26)
- PATENT ABSTRACTS OF JAPAN vol. 013, no. 028 (M-788), 23. Januar 1989 (1989-01-23) & JP 63 239338 A (TOYOTA MOTOR CORP), 5. Oktober 1988 (1988-10-05)

## Beschreibung

Die Erfindung betrifft ein Verfahren und eine Vorrichtung zur Steuerung einer Brennkraftmaschine, insbesondere eines Ottomotors mit Kraftstoff-Direkteinspritzung, gemäß den Oberbegriffen der unabhängigen Ansprüche.

An moderne Brennkraftmaschinen werden z.B. im Hinblick auf eine Reduktion des Kraftstoffverbrauches und der ausgestoßenen Schadstoffe und im Hinblick auf einen störungsfreien Betrieb immer höhere Anforderungen gestellt. Die Anforderungen sollen bei allen Belastungszuständen der Brennkraftmaschine und auch beim Wechsel zwischen unterschiedlichen Belastungszuständen erfüllt sein. Die verschiedenen Belastungszustände ergeben sich im wesentlichen aus der aktuellen Fahrsituation unter Berücksichtigung des vom Fahrer eines die Brennkraftmaschine aufweisenden Fahrzeuges geäußerten Fahrerwunsches nach Reduktion oder Steigerung des von der Brennkraftmaschine zur Verfügung gestellten Drehmoments.

Bei Steuerungen der hier betrachteten Art erfolgt die Ermittlung eines dem Fahrerwunsch entsprechenden Wunschdrehmomentes bzw. Drehmomentsollwertes auf Basis der Stellung mindestens eines vom Fahrer betätigbaren Bedienelementes, das In der Regel das Fahrpedal ist. Der Drehmomentsollwert wird, bei Fahrzeugen mit Ottomotor, in eine Sollstellung für die Drosselklappe umgesetzt, was bei Fahrzeugen mit elektronischer Motorleistungssteuerung (EGas) elektronisch über elektromotorische Drosselklappenverstellung erfolgt. Außerdem wird, ggf. neben dem einzustellenden Zündwinkel bzw. Einspritzwinkel, die zur Erzeugung des Wunschdrehmomentes erforderliche, der Brennkraftmaschine zuzumessende Kraftstoffmenge z.B. durch Berechnung ermittelt. Dann wird durch Zumessung der ermittelten Kraftstoffmenge zur Brennkraftmaschine, und ggf. durch entsprechende Einstellung des Zündwinkels bzw. Einspritzwinkels und/oder weiterer Steuergrößen, ein dem Wunschdrehmoment entsprechendes Drehmoment erzeugt. Die Kraftstoffzumessung erfolgt vorzugsweise durch Kraftstoffeinspritzung, insbesondere durch Direkteinspritzung in eine Brennkammer der Brennkraftmaschine.

Bei herkömmlichen Steuerungen dient die von der Brennkraftmaschine angesaugte Luft bzw. ein diese Ansaugluft repräsentierendes Luftmengen- oder Luftmassensignal als Führungsgröße zur Bestimmung der zuzumessenden Kraftstoffmenge. Ein Luftmengenmesser gibt Informationen über die angesaugte Luftmenge an die Steuerung. Weitere Meßfühler bzw. Sensoren ermitteln alle sonstigen, für die Kraftstoffzuteilung notwendigen Daten und melden diese der Steuerung, insbesondere Daten über die Motordrehzahl und den Lastzustand der Brennkraftmaschine. Aus diesen Eingangsgrößen werden die optimalen Parameter insbesondere für die einzuspritzende Kraftstoffmenge bzw. die Einspritzzeit, ggf. den einzustellenden Zündwinkel und/oder die zuzumessende Luftfüllung ermittelt. Die Zuordnung der Steuergrößen zu den Eingangsgrößen erfolgt bei modernen Steuerungen über entsprechende Kennfelder der Steuerung.

Neben der Steuerung der Menge des Kraftstoff-Luftgemisches ist zur Anpassung an verschiedene Betriebszustände der Brennkraftmaschine eine genaue Steuerung der Gemischzusammensetzung, also der Kraftstoffanreicherung im Kraftstoff-Luftgemisch, erforderlich. Das Kraftstoff-Luft-Mischungsverhältnis wird bekanntlich durch das Luftverhältnis λ charakterisiert, daß das Verhältnis zwischen zugeführter Luftmenge und dem theoretischen Luftbedarf für vollkommene Verbrennung angibt. Dabei entsprichtλ=1 einem Idealwert (homogenes Gemisch), Werte λ<1 entsprechen einem Luftmangel bzw. einem fetten Gemisch und werden z.B. bei Motorstart und im Vollastbereich eingestellt, und Werte λ>1 entsprechen einen Luftüberschuß bzw. einem mageren Gemisch, wie es z.B. im Teillastbereich zur Erzielung eines besonders wirtschaftlichen Betriebs angestrebt wird.

Bei modernen Brennkraftmaschinen mit Kraftstoff-Direkteinspritzung erfolgt eine an den Lastzustand angepaßte Ermittlung der zuzumessenden Kraftstoffmenge auf Basis von unterschiedlichen Kennfeldern, wobei jedes Kennfeld einer bestimmten Betriebsart entspricht. Als Betriebsarten werden beispielsweise ein Schichtungsbetrieb mit sehr magerem, nur in der Nähe der Zündkerze zündfähigen Gemisch, ein homogen magerer Betrieb mit Luftüberschuß (wirtschaftliches Fahren) und ein homogener Betrieb (λ=1) gewählt. Zwischen diesen Betnebsarten wird abhängig vom Fahrerwunsch und der aktuellen Fahrsituation umgeschaltet. Die Umschaltung kann zu Sprüngen des von der Brennkraftmaschine abgegebenen Drehmomentes führen, was sich im Fahrbetrieb als Ruckeln störend bemerkbar machen kann.

Der Erfindung liegt die Aufgabe zugrunde, die Nachteile des Standes der Technik zu vermeiden. Insbesondere soll ein ruckfreier Betrieb von Brennkraftmaschinen mit Kraftstoff-Direkteinspritzung bei Betriebsartenwechseln ermöglicht werden.

Zur Lösung dieser Aufgabe schlägt die Erfindung ein Verfahren mit den Merkmalen von Anspruch 1 sowie eine Vorrichtung mit den Merkmalen von Anspruch 7 vor. Bevorzugte Weiterbildungen sind in den abhängigen Ansprüchen angegeben. Der Wortlaut aller Ansprüche wird durch Bezugnahme zum Inhalt der Beschreibung gemacht.

Gemäß der Erfindung werden bei gattungsgemäßen Verfahren bei der Ermittlung der zuzumessenden, insbesondere einzuspritzenden Kraftstoffmenge mehrere Schritte durchgeführt. Dabei wird als Führungsgröße nicht, wie bisher, die angesaugte Luftmenge genutzt, sondern es dient der Wirkungsgrad von Kraftstoffzumessungen als Leitgröße zur Bestimmung der richtigen Kraftstoffzumessungsmenge. Zunächst wird als Reaktion auf den aus dem Fahrerwunsch abgeleiteten Drehmomentbedarf auf Basis eines angenommenen bzw. vorgegebenen Normal-Wirkungsgrades eine diesem Wirkungsgrad entsprechenden Normal-Kraftstoffmenge bzw. eine diese Normal-Kraftstoffmenge repräsentierende Größe ermittelt. Der Begriff "Wirkungsgrad" im Sinne dieser Anmeldung repräsentiert dabei den Wirkungsgrad, mit dem eine z.B. durch Einspntzung zugemessene Kraftstoffmenge in ein von der Brennkraftmaschine aufgrund dieser Kraftstoffmenge erzeugtes Drehmoment umgesetzt wird. Es versteht sich, daß dieser Wirkungsgrad nicht nur von der zudosierten Kraftstoffmenge, sondern insbesondere auch vom Zeitpunkt der Kraftstoffmengenzumessung während eines Arbeitshubes und von der aktuellen Gemischzusammensetzung abhängt. Der Wirkungsgrad, der als dimensionsloser Wert vorliegen kann, ändert sich je nach Betriebspunkt. Der Normal-Wirkungsgrad bildet eine Bezugsgröße, die einem angenommenen Normal-Betriebszustand entspricht, beispielsweise dem beschriebenen homogenen Betrieb mit λ=1. Für andere den Betriebszustand definierende Einflußgrößen können ebenfalls Normalwerte bzw. Optimalwerte angenommen werden. Die Zuordnung zwischen Eingangsgröße (Wunschdrehmoment) und Ausgangsgröße (Normal-Kraftstoffmenge bzw. entsprechendes Signal) dieser Ermittlung kann in einem Basiskennfeld für die Bezugsbetriebsart durchgeführt werden.

Bei erfindungsgemäßen Verfahren erfolgt außerdem eine Ermittlung eines sogenannten relativen Wirkungsgrades η auf Basis der aktuellen Betriebsbedingungen der Brennkraftmaschine. Diese Ermittlung kann zeitgleich oder im wesentlichen zeitgleich mit der Erfassung des aus dem Fahrerwunsch abgeleiteten Drehmomentbedarfs erfolgen. Bei der Ermittlung des aktuellen bzw. relativen Wirkungsgrades η können insbesondere die durch entsprechende Sensoren erfaßten Ist-Werte von Einspritz- bzw. Zündwinkel, von Abgasrückführung und/oder von der durch Androsselung und/oder Aufladung eingestellten, angesaugten Frischluftmasse berücksichtigt werden. Der relative Wirkungsgrad wird sich häufig vom Normal-Wirkungsgrad unterscheiden, kann aber auch gleich diesem sein, wenn der aktuelle Betriebszustand demjenigen Betriebszustand entspricht, der als Grundlage zur Berechnung des Normal-Wirkungsgrades dient.

Auf Grundlage des ermittelten relativen Wirkungsgrades η erfolgt nun eine Korrektur des Wertes für die Normal-Kraftstoffmenge, um die tatsächlich zuzumessende Kraftstoffmenge zu ermitteln. Die tatsächlich zuzumessende Kraftstoffmenge wird sich in der Regel von der als Rechengröße vorliegenden Normal-Kraftstoffmenge unterscheiden. Sie kann jedoch auch gleich der Normal-Kraftstoffmenge sein, wenn der relative Wirkungsgrad dem zugrundeliegenden, angenommenden Normal-Wirkungsgrad entspricht.

Erfindungsgemäß werden also Abweichungen vom Wirkungsgrad im zugrundegelegten Normalbetrieb in einem "relativen Wirkungsgradmodell" berechnet und mit einer Korrekturfunktion berücksichtigt. Bei geeigneter Wahl der Bezugs-Betriebsart für die Berechnung des Normal-Wirkungsgrades können die Abweichungen zwischen Normal-Wirkungsgrad und relativem Wirkungsgrad relativ gering sein und beispielsweise weniger als maximal 20 bis 25 % des Normal-Wirkungsgrades betragen. Dadurch haben möglicherweise vorhandene oder auftretende Fehler bei der Berechnung des relativen Wirkungsgrades η im Wirkungsgradmodell nur einen relativ geringen Einfluß auf die Änderung der berechneten Kraftstoffzumessung zwischen der als erste Näherung dienenden Normal-Kraftstoffmenge und der dem aktuellen Betriebszustand besser angepaßten, tatsächlichen zuzumessenden, "idealen" Kraftstoffmenge.

Die erfindungsgemäße Modelierung des relativen Wirkungsgrades η und dessen Berücksichtigung bei der Kraftstoffzumessung hat insbesondere zur Folge, daß beim Umschalten zwischen verschiedenen Betriebsarten eine Drehmomentenkontinuität gewahrt bleibt und Drehmomentsprünge verhindert werden. Die Erfindung ermöglicht also eine kontinuierliche bzw. stufenlose, im wesentlichen ruckfreie Darstellung bzw. Bereitstellung des gewünschten Drehmomentes auch bei brennverfahrensseitig bedingten Umschaltungen der Betriebsart (Kraftstoff-Luft-Verhältnis, Einspritz- bzw. Zündwinkel) der Brennkraftmaschine.

Zeitgleich oder im wesentlichen zeitgleich zur Ermittlung der tatsächlich zuzumessenden Kraftstoffmenge kann eine Steuerung der Sollwerte für Einspritz- bzw. Zündwinkel, Abgasrückführung und/oder der durch Androsselung und/oder Aufladung einzustellenden angesaugten Frischluftmasse und ggf. weiterer Größen in Abhängigkeit von der gewünschten Betriebsart der Brennkraftmaschine nach vorgegebenen Kennfeldern erfolgen. Die Luftmasse kann dabei relativ statisch bleiben.

Bei modernen Steuerungen wird häufig aus Brennverfahrensgründen oder zur Abgasnachbehandlung während eines Arbeitshubes der Brennkraftmaschine zusätzlich zu einer Hauptzumessung von Kraftstoff mindestens eine Nebenzumessung von Kraftstoff durchgeführt. Beispielsweise kann eine Nacheinspritzung eingesetzt werden, um zur Verbesserung der Abgasnachbehandlung die Abgastemperatur zu erhöhen. Eine Weiterbildung der Erfindung sieht für derartige Fälle vor, daß die Ermittlung eines Wertes für den relativen Wirkungsgrad für jede der Kraftstoffzumessungen (Hauptzumessung, Nebenzumessung) separat durchgeführt wird und daß die der mindestens einen Nebenzumessung entsprechende, ermittelte zuzumessende Nebenkraftstoffmenge bei der Ermittlung der tatsächlich zuzumessenden Kraftstoffmenge aus der ermittelten Hauptkraftstoffmenge berücksichtigt wird. Diese Maßnahme berücksichtigt, daß sich die Berechnungsgrundlagen für den Wirkungsgrad einer Kraftstoffzumessung z.B. bei unterschiedlichen Zündwinkeln unterscheiden. Die wirkungsgradbewerteten Einspritzmengen einer Voreinspritzung und/oder einer Nacheinspritzung können von der ermittelten Haupteinspritzmenge abgezogen werden, um das zu erzeugende Drehmoment insgesamt nicht zu verändern und auf dem Wert des Wunschdrehmomentes zu halten.

Es können bei einer Steuerung Maßnahmen zur Anpassung des Fahrverhaltens an die Fahrdynamik vorgesehen sein, um beispielsweise eine Ruckeldämpfung und/oder eine Lastschlagdämpfung durchzuführen. Bei einer Weiterbildung ist daher vorgesehen, daß das aus der Bedienelementstellung abgeleitete Wunschdrehmoment vor Ermittlung der zuzumessenden Kraftstoffmenge auf Basis von Parametern zur Anpassung des Fahrverhaltens korrigiert wird, wodurch die Eingangsgröße für die beschriebene wirkungsgradoptimierte Kraftstoffmengenzumessungsberechnung verändert werden kann.

Auch externe Drehmomenteingriffe, wie sie beispielsweise durch eine Antriebsschlupfregelung (ASR), eine Motorschleppmomentregelung (MSR) oder andere Traktionssysteme bewirkt werden, können in geeigneter Weise vor der wirkungsgradbasierten Ermittlung der zuzumessenden Kraftstoffmenge berücksichtigt werden. So kann beispielsweise bei Eingreifen einer Antriebsschlupfregelung die einem Drehmoment entsprechende Eingangsgröße für die wirkungsgradoptimierte Kraftstoffmengenzumessung korrigiert werden, um abweichend vom geäußerten Fahrerwunsch das Drehmoment in einer solchen Weise zu erzeugen, daß Schlupf berücksichtigt wird.

Bei einer Weiterbildung ist vorgesehen, daß auf Basis der zur Verbrennung zur Verfügung stehenden Luftmasse, die durch geeignete Sensorik erfaßt werden kann, eine für eine im wesentlichen rauchfreie Verbrennung maximal zulässige zuzumessende Maximalkraftstoffmenge ermittelt wird und daß eine Begrenzung der tatsächlich zuzumessenden Kraftstoffmenge auf diese Maximalkraftstoffmenge durchgeführt wird. Diese zur Rauchbegrenzung geeignete Maßnahme kann dynamische Effekte berücksichtigen, die sich beispielsweise dadurch ergeben, daß in einer Fahrsituation kurzzeitig nicht ausreichend Luft für die zur Erzeugung des gewünschten Drehmomentes erforderliche Verbrennung zur Verfügung steht. Hierdurch kann der Schadstoffausstoß der Brennkraftmaschine auch in Extremsituationen minimiert werden. Bei Aktivierung der Rauchbegrenzung kann die tatsächlich eingespritzte Kraftstoffmenge kleiner sein als die auf Grundlage des Wirkungsgradmodelles ermittelte, dem Fahrerwunsch entsprechende Kraftstoffmenge.

Durch die Erfindung lassen sich insbesondere die beschriebenen Nachteile beim Betrieb von Ottomotoren mit Direkteinspritzung vermeiden. Jedoch kann die Erfindung auch bei anderen Arten der Kraftstoffzumessung, insbesondere bei Saugrohreinspritzung, mit Vorteil eingesetzt werden. Auch für Diesel-Brennkraftmaschinen ist das erfindungsgemäße Verfahren, bei dem der Wirkungsgrad von Einspritzungen als Grenzvorgabe dient, möglich.

Diese und weitere Merkmale gehen außer aus der Beschreibung auch aus den Ansprüchen und der Zeichnung hervor. Eine Ausführungsform der Erfindung ist in der Zeichnung dargestellt und wird im folgenden näher erläutert. Es zeigt:

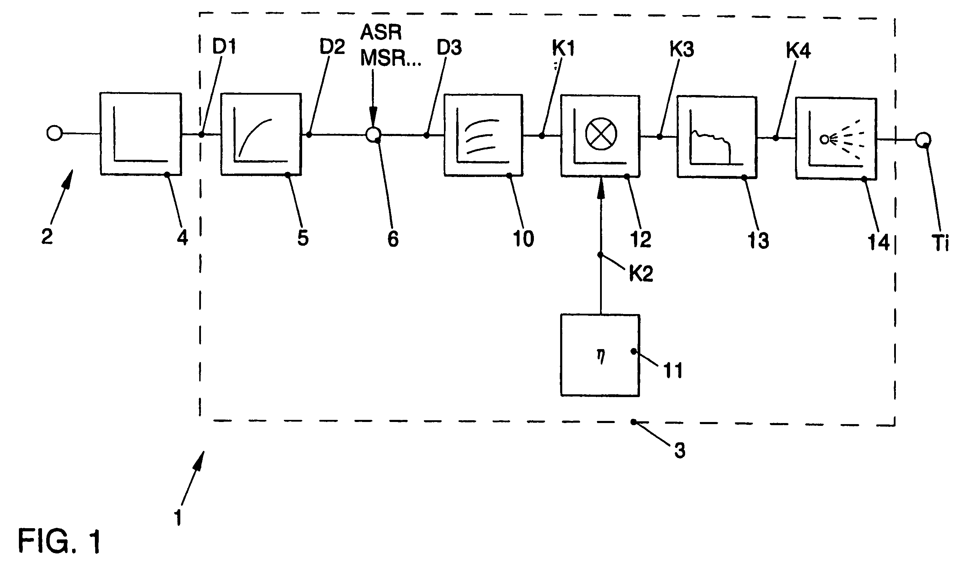

- Fig. 1: ein Ablaufdiagramm nach Art eines Blockschaltbildes zur Erläuterung einer bevorzugten Ausführungsform eines erfindungsgemäßen Verfahrens zur Steuerung einer Brennkraftmaschine.

In Fig. 1 ist schematisch ein Ausschnitt einer elektronischen Steuereinheit 1 zur Steuerung einer als Ottomotor mit Kraftstoff-Direkteinspritzung ausgebildeten Brennkraftmaschine gezeigt. Die Steuereinheit hat eine nicht gezeigte Eingangsschaltung, wenigstens einen Mikrocomputer zur Verarbeitung digitaler Signale und eine nicht gezeigte Ausgangsschaltung, wobei diese Elemente über eine geeignete Kommunikationsverbindung zum gegenseitigen Datenaustausch miteinander verbunden sind. An die Eingangsschaltung sind nicht gezeigte, zu Meßeinrichtungen führende Eingangsleitungen zu verschiedenen Meßeinrichtungen angeschlossen, um der Steuereinheit alle für einen optimalen Verbrennungsvorgang benötigten Parameter in Form geeigneter Signale zur Auswertung zuzuführen. An die Eingangsschaltung sind insbesondere eine Meßeinrichtung zur Erfassung der Motordrehzahl, eine Meßeinrichtung zur Erfassung der der Brennkraftmaschine zugeführten Frischluftmenge und eine Meßeinrichtung zur Erfassung der Stellung der Drosselklappe der Brennkraftmaschine angeschlossen. Über weitere, nicht gezeigte Meßeinrichtungen können der Eingangsschaltung Signale für weitere Betriebsgrößen der Brennkraftmaschine und/oder des Fahrzeuges zugeführt werden, die zur Steuerung der Brennkraftmaschine ausgewertet werden. Derartige Betriebsgrößen sind beispielsweise Ansauglufttemperatur, Umgebungsdruck, Saugrohrdruck, Abgaszusammensetzung oder dgl. Eine schematisch dargestellte angeschlossene Meßeinrichtung 2 zur Erfassung der Stellung des Fahrpedals dient dazu, der Steuereinheit ein Signal zuzuführen, das den Fahrerwunsch, also den Wunsch des Fahrers nach Reduktion oder Erhöhung des momentanen Drehmoments der Brennkraftmaschine repräsentiert.

Über die Ausgangsschaltung gibt die Steuereinheit Ausgangssignale zur Steuerung der Leistung der Brennkraftmaschine ab. Mittels der Ausgangssignale werden insbesondere die durch eine Einspntzzeit repräsentierte Menge der Kraftstoffzumessung, der Zündzeitpunkt bzw. Zündwinkel und, über ein Einstellung einer Drosselklappe der Brennkraftmaschine, die Füllung der Brennkraftmaschine gesteuert.

Zur Ermittlung der Kraftstoffmengenzumessung wird bei der bevorzugten Ausführungsform eine anhand von Fig. 1 näher erläuterte, erfindungsgemäße Kraftstoffmengenermittlungseinrichtung 3 verwendet, die in die Steuereinheit 1 integriert ist. Die Arbeitsweise der Kraftstoffmengenemnittlungseinrichtung wird aus Gründen der Übersichtlichkeit in Form eines Ablaufdiagrammes dargestellt. Die Realisierung des erfindungsgemäßen Steuerverfahrens erfolgt im bevorzugten Ausführungsbeispiel als Programm eines Mikrocomputers der Steuereinheit. Die in Fig. 1 dargestellten Elemente repräsentieren daher Programme, Programmteile oder Programmschritte einer solchen Realisierung sowie die entsprechenden Pfade der Signalleitung.

Im Betrieb des Steuersystems ist vorgesehen, daß zumindest auf Basis der durch die Meßeinrichtung 2 (z.B. Pedalwertgeber) erfaßten Stellung des Fahrpedals und der aktuellen Motordrehzahl ein Sollwert für ein Drehmoment der Brennkraftmaschine vorgegeben wird. Zur Ableitung eines dem Wunschdrehmoment bzw. Drehmomentsollwert entsprechenden Signales ist bei der gezeigten Ausführungsform ein erstes Kennfeld 4 vorgesehen, das auch als Fahrverhaltenskennfeld bezeichnet wird und das aus dem Signal für die Fahrpedalstellung und dem Signal für die Motordrehzahl das diesen Werten entsprechende Solldrehmoment oder Wunschdrehmoment ermittelt und ein entsprechendes Signal D1 abgibt

Sofern an dem Fahrzeug Einrichtungen zur dynamischen Fahrverhaltensbeeinflussung vorhanden sind, beispielsweise eine Ruckeldämpfung, eine Getriebesteuerung und/oder andere Maßnahmen im Antriebsstrang, können deren Einflüsse auf das Wunschdrehmoment in einem zweiten Kennfeld 5 aus entsprechenden Meßwerten oder Steuergrößen ermittelt und zur Erzeugung eines gegenüber dem Signal D1 ggf. modifizierten Signals D2 am Ausgang des zweiten Kennfeldes 5 modifiziert werden.

Sofern das die Brennkraftmaschine aufweisende Fahrzeug Einrichtungen ausweist, die das von der Brennkraftmaschine angeforderte Drehmoment abweichend von Fahrerwunsch ändern (sogenannte externe Drehmomenteingriffe, wie z.B. Antriebschlupfregelung (ASR), Motorschleppmomentregelung (MSR) oder dgl.) kann ein Wunschdrehmomentsignal D2 aufgrund dieser Eingriffe an geeigneter Stelle 6 der Signalverarbeitung zu einem Wunschdrehmomentsignal D3 modifiziert werden, das die externen Drehmomenteingriffe berücksichtigt.

Das dem ggf. modifizierten Wunschdrehmoment entsprechende Signal D3 dient als ein Eingangssignal einer ersten Einrichtung 10 der Kraftstoffmengenermittlungseinrichtung 3. Die erste Einrichtung 10 ermittelt aus dem einen Drehmomentbedarf repräsentierenden Eingangssignal D3 auf Basis eines angenommenen und durch entsprechende Programmierung vorgegebenen Normal-Wirkungsgrades einer Kraftstoffzumessung einen Wert für eine Normal-Kraftstoffmenge, die unter Annahme des Normal-Wirkungsgrades ein dem eingegebenen Wunschdrehmoment entsprechendes Drehmoment erzeugen würde. Ein diese Normal-Kraftstoffmenge repräsentierendes erstes Signal K1 wird abgegeben. Die erste Einrichtung 10 umfaßt vorzugsweise ein Kennfeld, das zur Berechnung des Normal-Wirkungsgrades z.B. von einem homogenen Betrieb der Brennkraftmaschine (Luftverhältnis λ=1) und einem geeigneten Normal-Zündwinkel ausgehen kann. Als Berechnungsbasis können auch Betriebsarten mit λ<1 oder λ>1 herangezogen werden.

Da während des Betriebes einer Brennkraftmaschine in der Regel häufig Wechsel zwischen unterschiedlichen Betriebsarten stattfinden, würde eine Kraftstoffeinspritzung auf Grundlage des ersten Signales K1 nur für einen gewissen Anteil von Fällen tatsächlich zum vom Fahrer gewünschten Drehmoment führen, während sich in Fällen, in denen der tatsächliche Betriebszustand vom zugrunde gelegten Normal-Betriebszustand abweicht, falsche Kraftstoffmengen und damit falsche Drehmomente ergeben würden.

Zur Vermeidung oder Verminderung derartiger Abweichungen vom Fahrerwunsch enthält die Kraftstoffmengenermittlungseinrichtung eine zweite Einrichtung 11, die auf Basis mindestens eines die aktuellen Betriebsbedingungen der Brennkraftmaschine repräsentierenden Betriebssignals als Bezugsgröße für die Kraftstoffmengenbestimmung einen sogenannten "relativen Wirkungsgrad" η berechnet und ein den relativen Wirkungsgrad η repräsentierendes zweites Signal K2 abgibt. Der relative Wirkungsgrad wird dabei in einem geeigneten Wirkungsgradmodell aus in der Steuereinheit vorhandenen Meß- und Steuergrößen ermittelt. Als Berechnungsgrundlage dienen insbesondere die aktuellen Ist-Werte für Einspritz- bzw. Zündwinkel, Abgasrückführrate, Luftverhältnis λ sowie Werte für Ladedruck und/oder Saugrohrdruck, die der durch Androsselung und/oder Aufladung eingestellten angesaugten Frischluftmasse entsprechen und durch die aktuelle Drosselklappenstellung mitbestimmt sind. Der aktuelle relative Wirkungsgrad wird zweckmäßig ständig, beispielsweise im Abstand von jeweils einigen Millisekunden, ermittelt.

Für die gewünschte Momentenkontinuität beim Wechsel zwischen Betriebsarten ist nun wesentlich, daß die auf Basis eines angenommenen Normal-Wirkungsgrades ermittelte, einzuspritzende Kraftstoffmenge (repräsentiert durch das erste Signal K1) im Hinblick auf das tatsächlich bei den aktuellen Betriebsbedingungen durch diese Kraftstoffmenge erzielbare Drehmoment überprüft und ggf. korrigiert wird. Hierzu ist eine Korrektureinrichtung 12 zur Korrektur des ersten Signal K1 auf Basis des zweiten Signals K2 und zur Erzeugung eines die tatsächlich zuzumessende Kraftstoffmenge repräsentierenden wahren Kraftstoffmengensignals K3 vorgesehen. Es wird ein der tatsächlich einzuspritzenden Kraftstoffmenge entsprechendes Kraftstoffmengensignal K3 in einem Kennfeld 12 in Abhängigkeit der für einen Normalbetrieb errechneten Normal-Kraftstoffmenge (Signal K1) und des relativen Wirkungsgrades η (Signal K2) bestimmt. Dies führt bei Betriebsarten, die von der zugrunde liegenden Normalbetriebsart (normalerweise λ=1) abweichen, zu einem vom Faktor 1 verschiedenen Korrekturfaktor, der bei der Berechnung der tatsächlich einzuspritzenden Kraftstoffmenge aus der (fiktiven) Normal-Kraftstoffmenge berücksichtigt wird. Auf diese Weise sorgt das Wirkungsgradmodell dafür, daß das erzeugte Drehmoment vor und nach einer Betriebsartenumschaltung im wesentlichen gleich ist, wodurch Drehmomentsprünge verhindert werden können.

Es hat sich gezeigt, daß dieser vom angenommenen Normal-Wirkungsgrad und dem Wirkungsgradmodell abhängige Korrekturfaktor in der Regel zwischen ca. 0,8 und ca. 1,2 liegt. Die Modellierung des relativen Wirkungsgrades und seine Berücksichtigung bei der Berechnung der Einspritzmenge führt also in der Regel zu Abweichungen von der Normal-Kraftstoffmenge von nicht mehr als 20 bis 25 %. Dies bedeutet, daß das erfindungsgemäße Verfahren relativ unempfindlich gegen mögliche Fehler in den beim Wirkungsgradmodell berücksichtigten Grundannahmen und dem entsprechenden Rechenalgorithmus sowie bei der Messung der zugrundeliegenden Grundgrößen (z.B. Zündwinkel, Ladedruck oder dgl.) ist.

Während also bei herkömmlichen Steuerungen ein erfaßtes Luftmassensignal (oder Luftmengensignal) bei der Steuerung der Brennkraftmaschine als Führungsgröße für die Berechnung der Kraftstoffmenge, des Zündzeitpunktes etc. dient, ist bei erfindungsgemäßen Verfahren so, daß als Führungsgröße der Wirkungsgrad einer Einspritzung bei gegebenen Betriebsbedingungen als Grenzvorgabe und Leitgröße verwendet und zur Ermittlung der tatsächlich zuzumessenden Kraftstoffmenge genutzt wird.

Zur weiteren Verbesserung des Schadstoffausstoßes ist bei der anhand von Fig. 1 erläuterten Ausführungsform noch eine Einrichtung 13 zur Rauchbegrenzung mit einem entsprechenden Kennfeld vorgesehen. Die Einrichtung ermittelt auf Basis der über eine geeignete Meßeinrichtung erfaßten, zur Verbrennung tatsächlich zur Verfügung stehenden Luftmenge eine für eine im wesentlichen rauchfreie Verbrennung maximal zulässige, zuzumessende Maximalkraftstoffmenge. Diese wird mit der durch das Signal K3 repräsentierten, aufgrund von Wirkungsgradrechnungen ermittelten, wirkungsgradoptimierten Kraftstoffmenge verglichen. In Fällen, in denen die wirkungsgradoptimierte zuzumessende Kraftstoffmenge (Signal K3) größer ist als die Maximalkrafstoffmenge, wird ein der Maximalkrafstoffmenge entsprechendes Signal S4 ausgelesen bzw. abgegeben, ansonsten bleibt es beim Signal S3. Dadurch können dynamische Effekte, wie sie beispielsweise durch kurzzeitigen Luftmangel auftreten können, berücksichtigt werden.

Das eine bestimmte einzuspritzende Kraftstoffmenge repräsentierende Ausgangssignal der Kraftstoffmengenermittlungseinrichtung dient schließlich als Eingangssignal eines weiteren Kennfeldes 14, das in Abhängigkeit von der gewünschten Kraftstoffmenge die dieser entsprechende Einspritzzeit Ti berechnet.

Bei dem beispielhaft erläuterten Verfahren und der entsprechenden Vorrichtung zur Steuerung einer Brennkraftmaschine ist somit vorgesehen, daß ausgehend von einem auf einen Fahrerwunsch zurückgehenden Wunschdrehmoment auf Basis eines angenommenden Normal-Wirkungsgrades einer Kraftstoffeinspritzung eine zur Erzeugung des Wunschdrehmomentes erforderliche, einzuspritzende Normal-Kraftstoffmenge ermittelt wird und daß diese anschließend zur Berechnung einer der Brennkraftmaschine tatsächlich zuzumessenden Kraftstoffmenge unter Berücksichtigung des aktuellen, sogenannten relativen Wirkungsgrades der Brennkraftmaschine korrigiert wird. Die Berücksichtigung des in einem Wirkungsgradmodell errechneten relativen Wirkungsgrades bewirkt, daß Drehmomentsprünge beim Wechsel zwischen Betriebsarten der Brennkraftmaschine weitgehend verhindert werden können.

## Patentansprüche

1. Verfahren zur Steuerung einer Brennkraftmaschine, insbesondere eines Ottomotors mit Kraftstoff-Direkteinspritzung, mit folgenden Schritten:
Ermittlung eines Wunschdrehmomentes auf Basis der Stellung mindestens eines von einem Fahrer betätigten Bedienelements;
Ermittlung einer zur Erzeugung des Wunschdrehmoments erforderlichen, der Brennkraftmaschine zuzumessenden Krafstoffmenge;
Erzeugung eines dem Wunschdrehmoment entsprechenden Drehmomentes der Brennkraftmaschine durch Zumessung der ermittelten Kraftstoffmenge zur Brennkraftmaschine,
**dadurch gekennzeichnet, daß** die Ermittlung der zuzumessenden Kraftstoffmenge folgende Schritte umfaßt:
Ermittlung einer Normal-Kraftstoffmenge auf Basis eines vorgegebenen Normal-Wirkungsgrades;
Ermittlung eines relativen Wirkungsgrades auf Basis der aktuellen Betriebsbedingungen der Brennkraftmaschine;
Korrektur der Normal-Kraftstoffmenge über den relativen Wirkungsgrad zur Ermittlung der tatsächlich zuzumessenden Krafstoffmenge.

2. Verfahren nach Anspruch 1, **dadurch gekennzeichnet, daß** während eines Arbeitshubes der Brennkraftmaschine zusätzlich zu einer Hauptzumessung von Kraftstoff mindestens eine Nebenzumessung von Kraftstoff durchgeführt wird, daß die Ermittlung des relativen Wirkungsgrades für jede der Zumessungen separat durchgeführt wird und daß die der mindestens einen Nebenzumessung entsprechende zuzumessende Nebenkraftstoffmenge bei der Ermittlung der tatsächlich zuzumessenden Kraftstoffmenge aus der ermittelten Hauptkraftstoffmenge, insbesondere durch Subtraktion der Nebenkraftstoffmenge von der Hauptkraftstoffmenge, berücksichtigt wird.

3. Verfahren nach Anspruch 1 oder 2, **dadurch gekennzeichnet, daß** vor einer wirkungsgradbasierten Ermittlung der zuzumessenden Kraftstoffmenge das Wunschdrehmoment auf Basis von Parametern zur Fahrverhaltensbeeinflussung korrigiert wird.

4. Verfahren nach einem der vorhergehenden Ansprüche, **dadurch gekennzeichnet, daß** vor einer wirkungsgradbasierten Ermittlung der zuzumessenden Kraftstoffmenge das Wunschdrehmoment auf Basis mindestens eines externen Drehmomenteingriffsparameters korrigiert wird, wobei ein Drehmomenteingriffsparameter insbesondere von einer Antriebsschlupfregelung und/oder einer Motorschleppmomentregelung bereitgestellt wird.

5. Verfahren nach einem der vorhergehenden Ansprüche, **dadurch gekennzeichnet, daß** auf Basis der zur Verbrennung zur Verfügung stehenden Luftmenge eine für eine im wesentlichen rauchfreie Verbrennung maximal zulässige, zuzumessende Maximalkraftstoffmenge ermittelt wird und daß eine Begrenzung der tatsächlich zuzumessenden Kraftstoffmenge auf die Maximalkraftstoffmenge durchgeführt wird.

6. Verfahren nach einem der vorhergehenden Ansprüche, **dadurch gekennzeichnet, daß** die Zumessung der tatsächlich zuzumessenden Kraftstoffmenge durch Direkteinspritzung der Kraftstoffmenge in eine Brennkammer der Brennkraftmaschine erfolgt und/oder daß es sich bei der Brennkraftmaschine um einen Ottomotor handelt.

7. Vorrichtung zur Steuerung einer Brennkraftmaschine, insbesondere eines Ottomotors mit Kraftstoff-Direkteinspritzung, mit einer elektronischen Steuereinheit, die mindestens eine Kraftstoffmengenermittlungseinrichtung zur Ermittlung eines zur Erzeugung eines Wunschdrehmomentes erforderlichen, der Brennkraftmaschine tatsächlich zuzumessenden Kraftstoffmenge aufweist, wobei das Wunschdrehmoment wenigstens auf Basis der Stellung wenigstens eines von einem Fahrer betätigbaren Bedienelementes ermittelt wird, **dadurch gekennzeichnet, daß** die Kraftstoffmengenermittlungseinrichtung (3) eine erste Einrichtung (10) zur Ermittlung einer Normal-Kraftstoffmenge auf Basis eines vorgegebenen Normal-Wirkungsgrades und zur Abgabe mindestens eines die Normal-Kraftstoffmenge repräsentierenden ersten Signals (K1); eine zweite Einrichtung (11) zur Ermittlung eines relativen Wirkungsgrades auf Basis mindestens eines die aktuellen Betriebsbedingungen der Brennkraftmaschine repräsentierenden Betriebssignales und zur Abgabe eines den relativen Wirkungsgrad repräsentierenden zweiten Signals (K2); und eine Korrektureinrichtung (12) zur Korrektur des ersten Signals (K1) auf Basis des zweiten Signals (K2) und zur Erzeugung eines die tatsächlich zuzumessende Kraftstoffmenge repräsentierenden Kraftstoffmengensignals (K3) aufweist.

## Claims

1. Method for controlling an internal combustion engine, in particular a spark ignition engine with direct fuel injection, comprising the following steps:
determination of a desired torque based on the position of at least one operating element actuated by a driver;
determination of a fuel quantity which is required in order to produce the desired torque and is to be metered to the internal combustion engine;
generation of an internal combustion engine torque corresponding to the desired torque by metering the determined fuel quantity to the internal combustion engine,
**characterized in that** the determination of the fuel quantity to be metered comprises the following steps:
determination of a normal fuel quantity based on a predetermined normal efficiency;
determination of a relative efficiency on the basis of the current operating conditions of the internal combustion engine;
correction of the normal fuel quantity on the basis of the relative efficiency in order to determine the fuel quantity that is actually to be metered.

2. Method according to Claim 1, **characterized in that** during a working stroke of the internal combustion engine, in addition to a primary metering of fuel, at least one secondary metering of fuel is carried out, **in that** the determination of the relative efficiency is carried out separately for each of the metering operations, and **in that** the corresponding secondary fuel quantity to be metered for the at least one secondary metering is taken into account during the determination of the fuel quantity that is actually to be metered from the determined primary fuel quantity, in particular by subtracting the secondary fuel quantity from the primary fuel quantity.

3. Method according to Claim 1 or 2, **characterized in that** prior to an efficiency-based determination of the fuel quantity to be metered, the desired torque is corrected on the basis of parameters for influencing the driving characteristics.

4. Method according to one of the preceding claims, **characterized in that** prior to an efficiency-based determination of the fuel quantity to be metered, the desired torque is corrected on the basis of at least one external torque intervention parameter, with a torque intervention parameter being provided, in particular by a wheel slip control and/or an engine drag torque control.

5. Method according to one of the preceding claims, **characterized in that** a maximum fuel quantity to be metered that is the maximum permissible for substantially smoke-free combustion is determined on the basis of the air quantity available for combustion, and **in that** the fuel quantity which is actually to be metered is restricted to the maximum fuel quantity.

6. Method according to one of the preceding claims, **characterized in that** the actual fuel quantity to be metered is metered in by direct injection of the fuel quantity into a combustion chamber of the internal combustion engine, and/or **in that** the internal combustion engine is a spark ignition engine.

7. Apparatus for controlling an internal combustion engine, in particular a spark ignition engine with direct fuel injection, having an electronic control unit, which has at least one fuel-quantity determination device for determining a fuel quantity which is required to generate a desired torque and is actually to be metered to the internal combustion engine, the desired torque being determined at least on the basis of the position of at least one operating element that can be actuated by a driver, **characterized in that** the fuel-quantity determination device (3) includes a first device (10) for determining a normal fuel quantity on the basis of a predetermined normal efficiency and for outputting at least one first signal (K1) representing the normal fuel quantity; a second device (11) for determining a relative efficiency on the basis of at least one operating signal which represents the current operating conditions of the internal combustion engine and for outputting a second signal (K2) which represents the relative efficiency; and a correction device (12) for correcting the first signal (K1) on the basis of the second signal (K2) and for generating a fuel quantity signal (K3) which represents the fuel quantity that is actually to be metered.

## Revendications

1. Procédé pour commander un moteur à combustion interne, notamment un moteur à allumage par étincelle avec injection directe de carburant, comprenant les étapes suivantes :
détection d'un couple souhaité sur là base de la position d'au moins un élément de commande actionné par un conducteur ;
détection d'une quantité de carburant nécessaire pour produire le couple souhaité, à distribuer au moteur à combustion interne ;
production d'un couple du moteur à combustion interne correspondant au couple souhaité par distribution de la quantité de carburant détectée au moteur à combustion interne,
**caractérisé en ce que** la détection de la quantité de carburant à distribuer comprend les étapes suivantes :
détection d'une quantité de carburant normale sur la base d'un rendement normal prédéfini ;
détection d'un rendement relatif sur la base des conditions de fonctionnement actuelles du moteur à combustion interne ;
correction de la quantité de carburant normale par rapport au rendement relatif pour détecter la quantité de carburant à distribuer effectivement.

2. Procédé selon la revendication 1, **caractérisé en ce que** pendant un temps de travail du moteur à combustion interne, on effectue en plus d'une distribution principale de carburant, au moins une distribution secondaire de carburant, **en ce que** la détection du rendement relatif pour chacune des distributions est effectuée séparément et **en ce que** la quantité de carburant secondaire à distribuer, correspondant à l'au moins une distribution secondaire, est prise en compte lors de la détection de la quantité de carburant à distribuer effectivement, à partir de la quantité de carburant principale détectée, notamment par soustraction de la quantité de carburant secondaire de la quantité de carburant principale.

3. Procédé selon la revendication 1 ou 2, **caractérisé en ce qu'**avant une détection de la quantité de carburant à distribuer, basée sur le rendement, le couple souhaité est corrigé sur la base de paramètres destinés à influencer le comportement de conduite.

4. Procédé selon l'une quelconque des revendications précédentes, **caractérisé en ce qu'**avant une détection de la quantité de carburant à distribuer, basée sur le rendement, le couple souhaité est corrigé sur la base d'au moins un paramètre d'intervention externe sur le couple, un paramètre d'intervention sur le couple étant en particulier fourni par une régulation du glissement d'entraînement et/ou par une régulation du couple d'entraînement du moteur.

5. Procédé selon l'une quelconque des revendications précédentes, **caractérisé en ce que** sur la base de la quantité d'air disponible pour la combustion, on détecte une quantité de carburant maximale admissible à distribuer pour une combustion essentiellement sans fumée, et **en ce que** l'on effectue une limitation de la quantité de carburant à distribuer effectivement à la quantité de carburant maximale.

6. Procédé selon l'une quelconque des revendications précédentes, **caractérisé en ce que** la distribution de la quantité de carburant à distribuer effectivement s'effectue par injection directe de la quantité de carburant dans une chambre de combustion du moteur à combustion interne, et/ou **en ce que** le moteur à combustion interne est un moteur à allumage par étincelle.

7. Dispositif de commande d'un moteur à combustion interne, notamment d'un moteur à allumage par étincelle avec injection directe de carburant, comprenant une unité de commande électronique qui présente au moins un dispositif de détection de la quantité de carburant pour détecter une quantité de carburant nécessaire pour produire un couple souhaité, à distribuer effectivement au moteur à combustion interne, le couple souhaité étant détecté au moins sur la base de la position d'au moins un élément de commande actionnable par un conducteur, **caractérisé en ce que** le dispositif de détection de la quantité de carburant (3) présente un premier dispositif (10) pour détecter une quantité de carburant normale sur la base d'un rendement normal prédéfini et pour délivrer au moins un premier signal (K1) représentant la quantité de carburant normale ; un deuxième dispositif (11) pour détecter un rendement relatif sur la base d'au moins un signal de fonctionnement représentant les conditions de fonctionnement actuelles du moteur à combustion interne et pour délivrer un deuxième signal (K2) représentant le rendement relatif ; et un dispositif de correction (12) pour corriger le premier signal (K1) sur la base du deuxième signal (K2) et pour produire un signal de quantité de carburant (K3) représentant la quantité de carburant à distribuer effectivement.
